# EUROPÄISCHE PATENTSCHRIFT

(11) **EP 3 615 426 B1**
(45) Veröffentlichungstag und Bekanntmachung des Hinweises auf die Patenterteilung: **17.02.2021**
(21) Anmeldenummer: 18723667.4
(22) Anmeldetag: 26.04.2018
(51) Int. Cl.: B64C 39/02

(54) **SYSTEM UND TRANSPORTVORRICHTUNG FÜR UNBEMANNTE LUFTFAHRZEUGE**
SYSTEM AND TRANSPORT DEVICE FOR UNMANNED AERIAL VEHICLE
SYSTÈME ET DISPOSITIF DE TRANSPORT POUR VÉHICULE AÉRIEN SANS PILOTE

(30) Priorität: 28.04.2017 AT 5007417 U
(43) Veröffentlichungstag der Anmeldung: 04.03.2020
(73) Patentinhaber: Ars Electronica Linz GmbH & Co KG, 4040 Linz (AT)
(72) Erfinder: HÖRTNER, Horst, 4115 Kleinzell (AT); DIRISAMER, Harald, 4040 Linz (AT)
(74) Vertreter: Röggla, Harald
(86) Internationale Anmeldenummer: PCT/AT2018/060083
(87) Internationale Veröffentlichungsnummer: WO 2018/195574

(56) Entgegenhaltungen:
- US-A1- 2015 183 326
- US-A1- 2016 364 989

## Beschreibung

Die Erfindung betrifft ein System aus zumindest zwei unbemannten Luftfahrzeugen, wobei jedes Luftfahrzeug eine Antriebseinheit, eine Flugsteuereinheit zum Steuern der Flugbahn des Luftfahrzeugs mittels der Antriebseinheit und eine wiederaufladbare Energiezelle aufweist.

Bei der Darstellung von Kunst oder Information in der Unterhaltungsindustrie, bei öffentlichen und privaten Veranstaltungen beziehungsweise im Allgemeinen ist es oft wünschenswert, eine Abbildung im Luftraum bereitzustellen. Die Entwicklung der letzten Jahre auf dem technischen Gebiet der unbemannten Luftfahrzeuge, im englischen Sprachgebrauch üblicherweise als "Unmanned Aerial Vehicle (UAV)" bezeichnet, insbesondere im Bereich der "Drohnen" beziehungsweise "Multicopter", haben dazu geführt, dass solche Luftfahrzeuge vermehrt für die Bereitstellung derartiger Abbildungen im Luftraum zum Einsatz kommen.

So wurden beispielsweise bei der öffentlichen Musikveranstaltung "Klangwolke" am 01. September 2012 in Linz, Österreich, 49 "Quadcopter" zu einem dynamischen Schwarmverbund kombiniert, um dynamische Abbildungen und Visualisierungen im Luftraum darzustellen. Jeder Quadcopter wies einen Lichtdiffusions-Schirm auf und innerhalb dieses Schirms ein LED-Leuchtmittel. Somit bildete jeder Quadcopter einen "Bildpunkt" der Abbildung im Luftraum, einen sogenannten "SPAXEL".

In Zukunft sollen weit größere Schwarmverbunde oder Systeme mit mehr als einhundert solcher Luftfahrzeuge zum Bereitstellen einer Abbildung im Luftraum zum Einsatz kommen. Damit dies sowohl technisch als auch wirtschaftlich durchführbar wird, sind hierzu noch ungelöste Probleme und Herausforderungen, insbesondere in Bezug auf die Logistik und die Steuerung großer Schwarmverbunde, zu lösen. Der Anmelderin sind diesbezüglich keine Lösungen bekannt, insbesondere in Bezug auf Logistik und Zuverlässigkeit bei einer Vielzahl von unbemannten Luftfahrzeugen.

Die Schrift US 2016/364989 A1 zeigt ein System zum Steuern von UAVs und zum Verwahren der UAVs in einer Transportvorrichtung mit einer durch Begrenzungselemente definierten Kammer. Die Transportvorrichtung kann ein Steuer- und Versorgungssystem zum Laden der Batterien aufweisen, beispielsweise über einen Stecker, eine Düse oder kabellos über induktives Laden.

Die US 2015/183326 A1 zeigt eine Transportvorrichtung mit Begrenzungselementen und darin stapelbare UAVs, welche mittels eines Steuer- und Versorgungssystems in der Transportvorrichtung geladen werden können.

Der Erfindung liegt die Aufgabe zugrunde ein System bereitzustellen, welches eine verbesserte Logistik und gegebenenfalls eine erhöhte Zuverlässigkeit einer Vielzahl von Luftfahrzeugen ermöglicht.

Erfindungsgemäß wird diese Aufgabenstellung durch die Merkmale des Anspruchs 1 gelöst.

Durch das erfindungsgemäße System wird vorteilhafterweise ein möglichst platzsparender und folglich möglichst einfacher Transport der Luftfahrzeuge ermöglicht. Die Energiezellen der Luftfahrzeuge können während des Transports und/ oder der Lagerung in der Transportvorrichtung geladen werden, und das Steuer- und Versorgungssystem kann die Luftfahrzeuge ansprechen, beispielsweise um deren technische Bereitschaft, insbesondere die Funktionstüchtigkeit vor deren Start, oder andere technische Parameter abzufragen. Die Ausfallwahrscheinlichkeit eines Luftfahrzeugs wird so vorteilhaft reduziert und in Folge die Zuverlässigkeit des Systems erhöht.

Im Zusammenhang mit der Schwarmsteuereinheit ist jede Schwarmsteuereinheit als ein Kernmodul ausgebildet, wobei die Luftfahrzeuge mittels der Kernmodule mechanisch entlang einer in Betriebslage im Wesentlichen vertikalen Stapelachse stapelbar ausgebildet sind und, wobei jedes Kernmodul die Flugsteuereinheit, die Energiezelle, die erste Schnittstelle, die sich an einer Unterseite des Kernmoduls befindet, und eine elektrische dritte Schnittstelle, die sich an einer der Unterseite entlang der Stapelachse gegenüberliegenden Oberseite des Kernmoduls befindet und zum elektrischen Verbinden mit der ersten Schnittstelle eines darüber gestapelten Luftfahrzeugs ausgebildet ist, aufweist, wobei in gestapeltem und verbundenen Zustand der Luftfahrzeuge das Steuer- und Versorgungssystem über die ersten und dritten Schnittstellen zum Laden der Energiezellen und/ oder zur Kommunikation mit den Kernmodulen ausgebildet ist. Hierdurch können die Luftfahrzeuge sehr einfach und kompakt, insbesondere ohne weitere (Hilfs-)Mittel, gestapelt werden, wobei der Kontakt zwischen den Luftfahrzeugen, beziehungsweise zwischen den Luftfahrzeugen und dem Steuer- und Versorgungssystem, gegebenenfalls automatisch und ununterbrochen hergestellt wird, während sich die Luftfahrzeuge in einem gestapelten Zustand befinden.

In einer vorteilhaften Ausgestaltung ist das Steuer- und Versorgungssystem der Transportvorrichtung zur kontaktlosen Kommunikation, vorzugsweise mittels elektromagnetischer Induktion, mit den ersten Schnittstellen der Luftfahrzeuge ausgebildet. So können das Laden der Energiezellen und die Kommunikation mit den Luftfahrzeugen vorteilhafterweise kontaktlos, vorzugsweise gleichzeitig mittels derselben Technologie, erfolgen.

In einer alternativen vorteilhaften Ausgestaltung ist das Steuer- und Versorgungssystem der Transportvorrichtung zur kontaktgebundenen Kommunikation, insbesondere mittels Schleifkontakten zwischen zumindest einem der Begrenzungselemente der Kammer und den ersten Schnittstellen der Luftfahrzeuge, mit den ersten Schnittstellen der Luftfahrzeuge ausgebildet. Dies ermöglicht eine möglichst störungs- und strahlungsfreie Kommunikation. Während sich das Luftfahrzeug in der Kammer befindet ist der Kontakt zwischen dem Luftfahrzeug und der Transportvorrichtung gemäß dem Beispiel des Schleifkontaktes automatisch und ununterbrochen hergestellt.
Zweckmäßig ist das Steuer- und Versorgungssystem der Transportvorrichtung in eine Bodeneinheit der Transportvorrichtung integriert, wobei die Kammer in Betriebslage oberhalb der Bodeneinheit angeordnet und das Steuer- und Versorgungssystem mit der ersten Schnittstelle des jeweils untersten gestapelten Luftfahrzeugs verbindbar ausgebildet ist. Hierdurch wird einerseits die Transportvorrichtung in Bezug auf Kompaktheit und/ oder im weiteren Sinn in Bezug auf den Formfaktor optimiert. Andererseits kann im Fall, dass die Schwarmsteuereinheiten als Kernmodule ausgebildet sind, ein sehr einfaches und schnelles Stapeln der Luftfahrzeuge erreicht werden, wobei der Kontakt gegebenenfalls automatisch hergestellt wird, sobald das Luftfahrzeug auf die Bodeneinheit beziehungsweise auf ein bereits in der Kammer gestapeltes und gehaltenes Luftfahrzeug gestapelt wird.

Vorteilhaft ist die Transportvorrichtung weiters zum Starten und Landen der Luftfahrzeuge ausgebildet, wobei die Kammer an einer in Betriebslage Oberseite der Transportvorrichtung offen ist und wobei das Steuer- und Versorgungssystem der Transportvorrichtung zum Übertragen und/ oder zum Ändern von Start- und/ oder Landereihenfolgeinformationen und/ oder von Positionsinformationen an alle/ aller Flugsteuereinheiten der mit dem Steuer- und Versorgungssystem verbundenen Luftfahrzeuge ausgebildet ist. Hierdurch können die Luftfahrzeuge vorteilhaft direkt aus der Transportvorrichtung starten und gegebenenfalls auch wieder in/ auf diese/r landen, wobei die Luftfahrzeuge anhand von Startreihenfolgeinformationen, Positionsinformationen und Landereihenfolgeinformationen zu einem gewünschten Zeitpunkt direkt aus der Transportvorrichtung zu einer gewünschten Position im Luftraum gesteuert werden können und vice versa.

Zweckmäßig weist die Transportvorrichtung ein, vorzugsweise im Wesentlichen vertikal, bewegbares Hebemittel auf, welches Hebemittel dazu ausgebildet ist, das jeweils oberste in der Kammer gestapelte Luftfahrzeug für den Startvorgang zumindest teilweise über die Begrenzungselemente der Kammer anzuheben, wobei das Steuer- und Versorgungssystem zum Steuern des Hebemittels ausgebildet ist. Das Starten eines Luftfahrzeugs wird so erleichtert und das diesbezügliche Unfallrisiko reduziert.

Zweckmäßig weist das Hebemittel einen Kippmechanismus oder ein Wischmittel auf, wobei der Kippmechanismus oder das Wischmittel dazu ausgebildet ist, ein funktionsunfähiges Luftfahrzeug vom darunterliegenden Luftfahrzeug oder vom Hebemittel zu entfernen, wobei das Steuer- und Versorgungssystem zum Steuern des Kippmechanismus oder des Wischmittels und zum Ändern der Start- und/ oder Landereihenfolgeinformationen und/ oder der Positionsinformationen an alle/ aller mit dem Steuer- und Versorgungssystem verbundenen Luftfahrzeuge ausgebildet ist. Stellt das Steuer- und Versorgungssystem fest, dass ein zu startendes Luftfahrzeug funktionsunfähig ist, kann dieses automatisiert von dem Hebemittel entfernt werden und das nächste funktionsfähige Luftfahrzeug tritt an dessen Stelle, wobei gegebenenfalls das Steuer- und Versorgungssystem die Start- und/ oder Landereihenfolgeinformationen und/ oder der Positionsinformationen entsprechend ändert.

Zweckmäßig weist die Transportvorrichtung oder das Hebemittel einen Startmechanismus, insbesondere einen Katapultstartmechanismus, auf, wobei der Startmechanismus dazu ausgebildet ist, ein zu startendes Luftfahrzeug mechanisch in eine Startposition im Luftraum oberhalb der Transportvorrichtung zu befördern, insbesondere zu katapultieren, wobei das Steuer- und Versorgungssystem zum Steuern des Startmechanismus ausgebildet ist. Ist zum Beispiel kein zusätzliches Hebemittel vorhanden, kann so vorteilhafterweise jedes zu startende Luftfahrzeug direkt aus der Kammer in den Luftraum gebracht, insbesondere katapultiert, werden, und in der Folge seine Position im Luftraum ansteuern. Ist ein zusätzliches Hebemittel vorhanden, kann das zu startende Luftfahrzeug von dem Hebemittel in den Luftraum gebracht, insbesondere katapultiert, werden. Das Starten eines Luftfahrzeugs wird so erleichtert und das diesbezügliche Unfallrisiko reduziert.

In einer weiterführenden Ausgestaltung weist das System zumindest zwei, vorzugsweise eine Mehrzahl von, Transportvorrichtungen und eine Systemschwarmsteuereinheit zum Steuern einer Mehrzahl unbemannter Luftfahrzeuge in einem Schwarm auf, wobei die Systemschwarmsteuereinheit zum Kommunizieren mit den Steuer- und Versorgungssystem der einzelnen Transportvorrichtungen und/ oder zum Kommunizieren mit den einzelnen Luftfahrzeugen über deren Schwarmsteuereinheiten oder über Kommunikationsmittel der Luftfahrzeuge ausgebildet ist. Hierdurch können vorteilhaft eine Vielzahl von Luftfahrzeugen, insbesondere mehrere einhundert Luftfahrzeuge, mittels der Systemschwarmsteuereinheit gestartet, gegebenenfalls direkt aus der jeweiligen Transportvorrichtung, und/ oder im Luftraum gesteuert und/ oder gelandet, gegebenenfalls direkt in/ auf die/ der jeweilige Transportvorrichtung, werden.

Vorteilhaft ist bei einer erfindungsgemäßen Transportvorrichtung die Höhe der Kammer, insbesondere abschnittsweise durch vertikales Stapeln einheitlicher Begrenzungselemente mit festgelegten Dimensionen, an die Anzahl der aufgenommenen Luftfahrzeuge anpassbar ausgebildet. Hierdurch wird die Flexibilität und/ oder die Modularität des erfindungsgemäßen Systems verbessert.

Vorteilhaft weist die Transportvorrichtung Landemittel zum erleichterten Landen der in die Kammer aufzunehmenden Luftfahrzeuge auf. Das Landen eines Luftfahrzeugs wird so erleichtert und das diesbezügliche Unfallrisiko reduziert.

Zweckmäßig weist die Transportvorrichtung an ihrer Oberseite, vorzugsweise steuerbare Fixiermittel zum Fixieren der in der Kammer aufgenommenen Luftfahrzeuge auf. Das Transportieren der Luftfahrzeuge wird so verbessert und das diesbezügliche Schadensrisiko beim Transport reduziert. Optional ist das Steuer- und Versorgungssystem zum Steuern, insbesondere zum Freigeben, der Fixiermittel, ausgebildet.

Zweckmäßig sind die Luftfahrzeuge durch handelsübliche, zum Einzelflug hergestellte Luftfahrzeuge, insbesondere durch Multicopter, gebildet. Hierdurch kann das System kostengünstig angeschafft, gegebenenfalls erweitert und besonders einfach für den Schwarmflug angepasst werden. Jede erfindungsgemäße Transportvorrichtung, insbesondere die Form und die Größe der Kammer, ist entsprechend an die Luftfahrzeuge angepasst oder anpassbar.

Weiters kann das System, insbesondere wenn es eine Mehrzahl von Transportvorrichtungen und Luftfahrzeugen aufweist, zweckmäßig eine Bodenplattform zum Tragen der Transportvorrichtungen aufweisen, wobei zwischen dem Steuer- und Versorgungssystem der Transportvorrichtungen auf der Bodenplattform und der Systemschwarmsteuereinheit ein fester Positionsbezug ausgebildet ist. So wird vorteilhaft die Logistik und Steuerbarkeit einer großen Vielzahl, beispielsweise mehrere einhundert, von Luftfahrzeugen ermöglicht und das Fehlerrisiko, insbesondere in Bezug auf die Start-, Landereihenfolge- und Positionsinformationen, wird reduziert.

Im Folgenden werden das erfindungsgemäße System und die erfindungsgemäße Transportvorrichtung in nicht einschränkender Weise anhand von, in den Zeichnungen dargestellten beispielhaften Ausgestaltungen näher erläutert.
Figur 1 zeigt in einer perspektivischen Ansicht von oben ein System gemäß einer ersten Ausgestaltung der Erfindung, wobei das System eine Vielzahl von Transporteinrichtungen und unbemannten Luftfahrzeugen aufweist.
Figur 2 zeigt in einer perspektivischen Ansicht von oben ein stapelbares unbemanntes Luftfahrzeug mit einem Kernmodul gemäß Figur 1.
Figur 3 zeigt in einer perspektivischen Ansicht zwei in einer Transportvorrichtung aufgenommene, gestapelte Luftfahrzeuge gemäß Figur 1.
Figur 4 zeigt in einer perspektivischen Ansicht von unten das Kernmodul eines unbemannten Luftfahrzeugs gemäß Figur 1.
Figur 5 zeigt ein unbemanntes Luftfahrzeug gemäß einer weiteren Ausführung, die nicht Teil der Erfindung ist.

Der Begriff "Luftraum" bezieht sich in der nachfolgenden Beschreibung auf jeden möglichen Raum oberhalb eines künstlichen oder natürlichen Bodens innerhalb oder außerhalb eines künstlichen oder natürlichen Raumes beziehungsweise Gebäudes.

Der Begriff "Schwarmintelligenz" bezieht sich in der nachfolgenden Beschreibung auf spezifische Vorteile des Schwarmverbundflugs, insbesondere die kollektive Bewegung mehrerer Individuen im Schwarm anhand der Bewegung einzelner Weniger und/ oder die ständige Anpassung der Abstände der einzelnen Individuen in gegenseitiger Abhängigkeit der am nächsten benachbarten Individuen, wobei in der vorliegenden Erfindung die Individuen als unbemannte Luftfahrzeuge ausgebildet sind. "Schwarmflug" bedeutet in diesem Zusammenhang das Vermögen des Systems diese Luftfahrzeuge automatisiert, mit möglichst geringem technischem Aufwand möglichst kollisionsfrei durch einen gemeinsamen Luftraum zu bewegen.

Der Begriff "in Betriebslage" bezieht sich in der nachfolgenden Beschreibung auf die für den erfindungsgemäßen Betrieb der jeweilige Vorrichtung oder des jeweiligen Gegenstands vorgesehene Ausrichtung im dreidimensionalen Raum. Dies bedeutet beispielsweise, dass ein "im Wesentlichen vertikal" ausgerichteter Gegenstand, der sich in seiner Betriebslage auf festem Boden befindet, im Wesentlichen nach dem Lot ausgerichtet ist. "Im Wesentlichen" drückt diesbezüglich eine übliche zu tolerierende Abweichung innerhalb eines entsprechenden Toleranzintervalls aus. Im Beispiel von "im Wesentlichen vertikal" ist folgend eine Ausrichtung nach dem Lot mit einer tolerierbaren Abweichung von vorzugsweise weniger als zwanzig Winkelgrad, besonders vorzugsweise weniger als zehn Winkelgrad, im Verglich zum Lot als anzusehen.

In der nachfolgenden Beschreibung werden für idente oder im Wesentlichen idente Ausführungen dieselben Bezugszeichen verwendet und nur Merkmale, die in ihrer technischen Funktion oder Wirkung im Sinne dieser beispielhaften Beschreibung einzigartig sind, mit eigenen Bezugszeichen versehen.

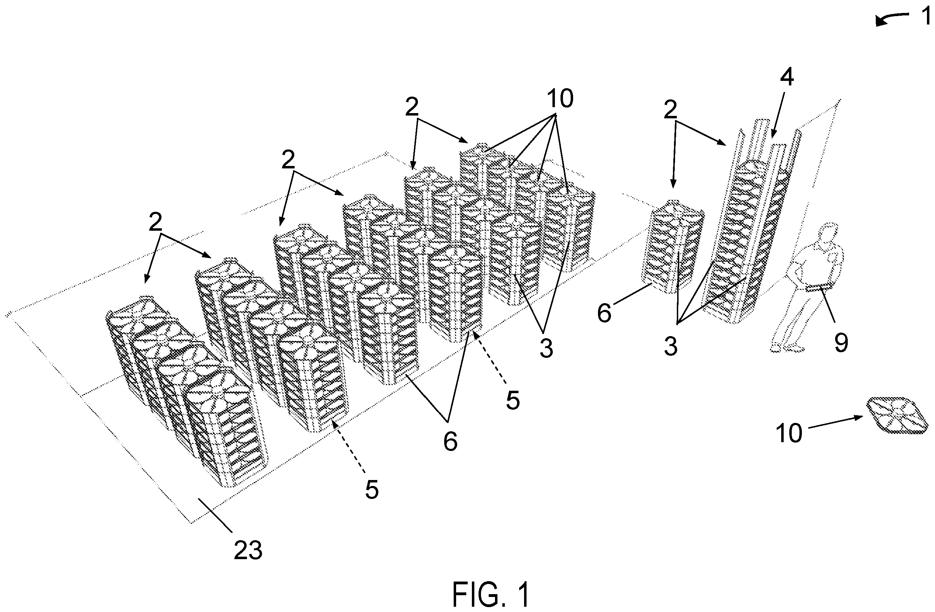

Figur 1 zeigt schematisch ein System 1 gemäß einer ersten Ausgestaltung der Erfindung, aufweisend eine Mehrzahl, genauer gesagt, sechsundzwanzig (26), an Transportvorrichtungen 2 und eine Mehrzahl, genauer gesagt, einhundertneunzig (190), an unbemannten Luftfahrzeugen 10. Folglich transportiert, beziehungsweise lagert, jede Transportvorrichtung 2 sieben Luftfahrzeuge 10, wobei genau eine Transportvorrichtung 2 vierzehn Luftfahrzeuge 10 transportiert. Diese Transportvorrichtung 2 wurde also in Betriebslage in Bezug auf ihre Höhe erweitert, um eine größere Anzahl an Luftfahrzeugen 10 zu transportieren, beziehungsweise zu lagern. Das erfindungsgemäße System 1 ist für jede Anzahl von unbemannten Luftfahrzeugen 10 und/ oder Transportvorrichtungen 2 anwendbar.

Jede Transportvorrichtung 2 weist eine durch Begrenzungselemente 3, die in der vorliegenden ersten Ausgestaltung des Systems 1 als Eckelemente ausgebildet sind, definierte Kammer 4 zum Aufnehmen der in Betriebslage im Wesentlichen vertikal gestapelten Luftfahrzeuge 10 auf. Weiters weist jede Transportvorrichtung 2 ein elektrisches Steuer- und Versorgungssystem 5 auf, welches in eine Bodeneinheit 6 der Transportvorrichtungen 2 integriert ist. In Betriebslage ist die Kammer 4 oberhalb der Bodeneinheit 6 angeordnet.

Die Höhe der Kammer 4 ist optional durch vertikales Stapeln der Begrenzungselemente 3 an die Anzahl der aufgenommenen Luftfahrzeuge 10 anpassbar. Die Höhe der Kammer 4 kann beispielsweise abschnittsweise, durch festgelegte Dimensionen der Begrenzungselemente 3, anpassbar sein. Dies ist in Figur 1 bei der am weitesten rechts angeordneten Transportvorrichtung 2 dargestellt, die ansonsten vollkommen ident mit den anderen Transportvorrichtungen 2 ist, da sich alle wesentlichen technischen und funktionellen Merkmale in der Bodeneinheit 6 befinden.

Alternativ kann das Steuer- und Versorgungssystem 5 beispielsweise an der Transportvorrichtung 2 angebracht oder in die Begrenzungselemente 3 integriert sein. Auch könnte das Steuer- und Versorgungssystem 5 in eine Deckeleinheit integriert oder unabhängig von der Transportvorrichtung 2 als eigenständige Einheit ausgebildet sein.

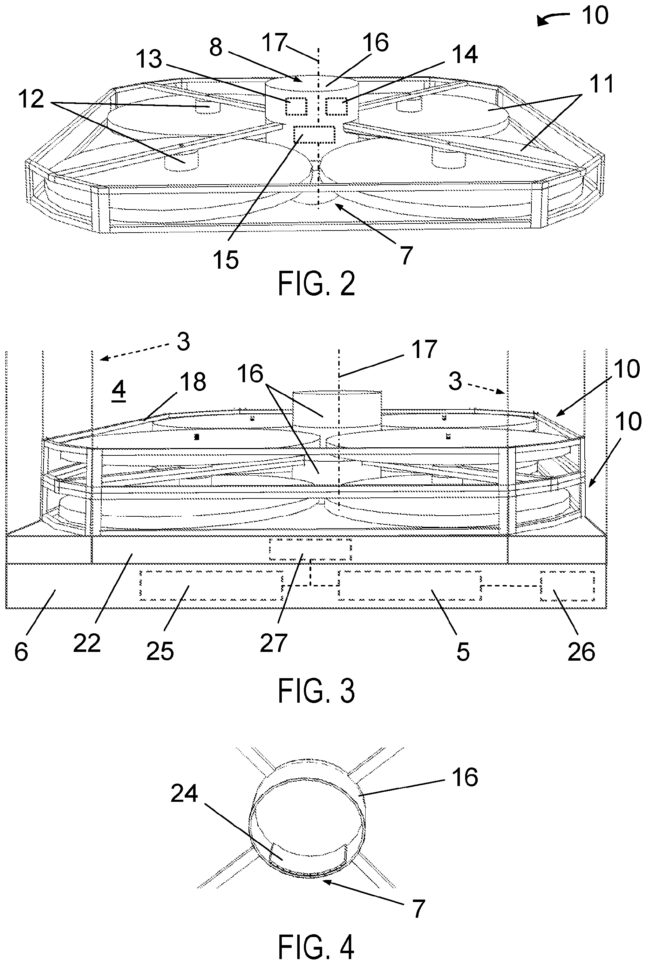

Figur 2 zeigt in einer schematischen Ausgestaltung ein Beispiel für ein unbemanntes Luftfahrzeug 10 zur Anwendung in dem System 1. Das Luftfahrzeug 10 ist dabei als zum Einzelflug hergestellte Drohne, genauer bezeichnet als sogenannter "Quadcopter" ausgeführt. Diesbezüglich ist eine Antriebseinheit des Luftfahrzeugs 10 aus vier Rotoreinheiten 11 gebildet, die mittels vier Elektromotoren 12 angetrieben werden. Die Antriebseinheit ermöglicht den Flug des Luftfahrzeugs 10 im Luftraum.

Ein "Quadcopter" ist eine Variante eines "Multicopters". Das Luftfahrzeug 10 kann alternativ als eine andere Variante eines Multicopters ausgebildet sein, beispielsweise als handelsüblicher "Oktocopter" mit acht Rotoreinheiten, usw., wobei im Wesentlichen jede Anzahl von Rotoreinheiten möglich ist. Das unbemannte Luftfahrzeug 10 kann aber auch ein beliebiges, als ein, in seiner Position im Luftraum, stabilisierbares Luftfahrzeug, ausgebildet sein (etwa Zeppelin, Ballon uvam.).

Das Luftfahrzeug 10 weist weiters eine elektrische erste Schnittstelle 7 und eine Flugsteuereinheit 13 auf, die zum Steuern der Flugbahn des Luftfahrzeugs 10 mittels der Antriebseinheit ausgebildet ist. Die Flugsteuereinheit 13 ist zum Ansteuern von durch Positionsinformationen gekennzeichneten Positionen des Luftfahrzeugs 10 im Luftraum ausgebildet, um die Flugbahn des Luftfahrzeugs 10 zu steuern. Die Positionsinformationen sind in einer Speichereinheit 14 der Flugsteuereinheit 13 oder in einer separaten Speichereinheit 14 gespeichert. Mit der Flugsteuereinheit 13 ist es somit möglich das Luftfahrzeug 10 mit einer bestimmten Fluggeschwindigkeit an eine bestimmte Position im Luftraum oder entlang einer bestimmten Flugbahn im Luftraum zu steuern.

Alternativ empfängt die Flugsteuereinheit 13 die Steuerinformationen ausschließlich oder zusätzlich von einer Funkfernsteuerung (nicht dargestellt). Die Funkfernsteuerung kann eine handelsübliche Funkfernsteuerung sein, die gemeinsam mit dem Luftfahrzeug 10 verkauft wurde. Alternativ kann auch ein handelsüblicher Computer, ein Laptop-Computer, ein Tablet-Computer, ein Smartphone, usw. benutzt werden.

Die Positionsinformationen sind beispielsweise "Global Positioning System (GPS)"-basierte, dreidimensionale Koordinaten im Luftraum, also beispielsweise Daten im GPS Exchange Format (GPX). Die Daten im GPX-Format können Geodaten, also die geografischen Koordinaten Breite, Länge und Höhe, beinhalten. Das Luftfahrzeug 10 weist diesbezüglich gegebenenfalls weiters einen GPS-Empfänger auf. Alternativ können die Daten auch auf dem Galileo-, GLONASS-, Beidou/Compass- oder jedem weiteren Satellitennavigations- und/ oder Zeitgebungssystem oder auf einem lokalen oder gebäudebasierten Navigationssystem zur Positionsbestimmung des Luftfahrzeuges 10 innerhalb und außerhalb von Gebäuden basieren (etwa Positionsbestimmung durch Übermittlung von Sendesignalen, Optische Positionsbestimmungssysteme etc.). Die Flugbahn des Luftfahrzeuges 10 entspricht einer zeitlichen Abfolge von Positionen, die ebenfalls Daten im GPX-Format sein können. Das Ausmaß der zeitlichen Abfolge bestimmt die Fluggeschwindigkeit des Luftfahrzeugs 10.

Das Luftfahrzeug 10 weist weiters eine wiederaufladbare Energiezelle 15 auf. Die erste Schnittstelle 7 ist mit dem elektrischen Steuer- und Versorgungssystem 5 verbindbar, wobei das elektrische Steuer- und Versorgungssystem 5 zum Laden der Energiezelle 15 und/ oder zum Kommunizieren mit der Flugsteuereinheit 13 über die erste Schnittstelle 7 ausgebildet ist.

Das Steuer- und Versorgungssystem 5 einer oder jeder Transportvorrichtung 2 kann zur kontaktgebundenen Kommunikation mit den ersten Schnittstellen 7 der Luftfahrzeuge 10 ausgebildet sein. Bei dem System 1 gemäß der ersten Ausgestaltung der Erfindung, die in Figur 1 dargestellt ist, weist jedes Luftfahrzeug 10 gemäß Figur 2 eine modulare Schwarmsteuereinheit 16 in einer ersten Ausführung auf. Diese Schwarmsteuereinheit 16 ist zur kontaktgebundenen Kommunikation als ein Kernmodul ausgebildet, wobei die Luftfahrzeuge 10 mittels der Kernmodule mechanisch entlang einer in Betriebslage im Wesentlichen vertikalen Stapelachse 17 stapelbar ausgebildet sind.

Jedes Kernmodul weist die Flugsteuereinheit 13, die Energiezelle 15, gegebenenfalls die Speichereinheit 14, die erste Schnittstelle 7, die sich an einer Unterseite des Kernmoduls befindet, und eine elektrische dritte Schnittstelle 8 auf. Die dritte Schnittstelle 8 befindet sich an einer der Unterseite entlang der Stapelachse 17 gegenüberliegenden Oberseite des Kernmoduls und ist zum elektrischen Verbinden mit der ersten Schnittstelle 7 eines darüber gestapelten Luftfahrzeugs 10 ausgebildet. Eine elektrische zweite Schnittstelle 20, über welche die Schwarmsteuereinheit 16 zur kontaktlosen Steuerung der Flugsteuereinheit 13 und/ oder zum Laden der Energiezelle 15 ausgebildet ist, ist in diesem Fall nur optional notwendig, da die hierfür notwendigen Verbindungen auch intern im Kernmodul ausgebildet sein können. Die zweite Schnittstelle 20 ist besonders dann sinnvoll, wenn handelsübliche Luftfahrzeuge 10 zum Einsatz kommen, die bereits eine Schnittstelle zur Flugsteuereinheit 13 aufweisen. Dann kann die Schwarmsteuereinheit 16 direkt an eine Schnittstelle zur Flugsteuereinheit 13 gemäß einem Standard der folgenden Protokolle angekoppelt werden: Micro Air Vehicle Communication Portocol; CAN-Bus Protocol.

In gestapeltem und verbundenem Zustand der Luftfahrzeuge 10 ist das Steuer- und Versorgungssystem 5 über die ersten Schnittstellen 7 und die dritten Schnittstellen 8 zum Laden der Energiezellen 15 und/ oder zur Kommunikation mit den Kernmodulen ausgebildet. Eine derartige Situation ist on Figur 3 schematisch dargestellt, wobei zwei Luftfahrzeuge 10 auf der Bodeneinheit 6 einer Transportvorrichtung 2 in deren Kammer 4 gestapelt und mittels der ersten Schnittstellen 7 und der dritten Schnittstellen 8 mit dem Steuer- und Versorgungssystem 5 der Transportvorrichtung 2 verbunden sind. Das Steuer- und Versorgungssystem 5 ist also in Betriebslage mit der ersten Schnittstelle 7 des untersten gestapelten Luftfahrzeugs 10 verbunden und jedes darüber gestapelte Luftfahrzeug 10 ist durch dessen erste Schnittstelle 7 mit der dritten Schnittstelle 8 des darunter liegenden Luftfahrzeugs 10 verbunden. Die Transportvorrichtung 2, insbesondere die Bodeneinheit 6 kann eine zusätzliche Energiequelle 25, beispielsweise eine Energiezelle hoher Kapazität, aufweisen.

Diese kontaktgebundenen Kommunikation über die ersten Schnittstellen 7 und die dritten Schnittstellen 8 kann im vorliegenden Beispiel der Kernmodule, wobei eines in Figur 4 näher dargestellt ist, als durchgehender Systembus 24 ausgeführt sein, der bei mechanischer Stapelung der Luftfahrzeuge 10 automatisch, beispielsweise über flexible Feder-Kontaktstifte, hergestellt wird. Optional kann zusätzlich eine kraftübertragende Verbindung, beispielsweise über einen Bajonettverschluss, über eine mechanische Verriegelung, oder über Magnetkraft, hergestellt werden. Diese Verbindung kann mittels dem Steuer- und Versorgungssystem 5 automatisiert geöffnet oder geschlossen werden.

Alternativ könnte die kontaktgebundene Kommunikation beispielsweise mittels Schleifkontakten zwischen zumindest einem der Begrenzungselemente 3 der Kammer 4 und den ersten Schnittstellen 7 der Luftfahrzeuge 10 ausgebildet sein, welche ersten Schnittstellen 7 sich dann beispielsweise an einem Rahmen 18 der Luftfahrzeuge 10 befänden. Die Begrenzungselemente 3, also die Eckelemente, der Transportvorrichtung 2 sind in Figur 3 mittels strichlierten Linien angedeutet.

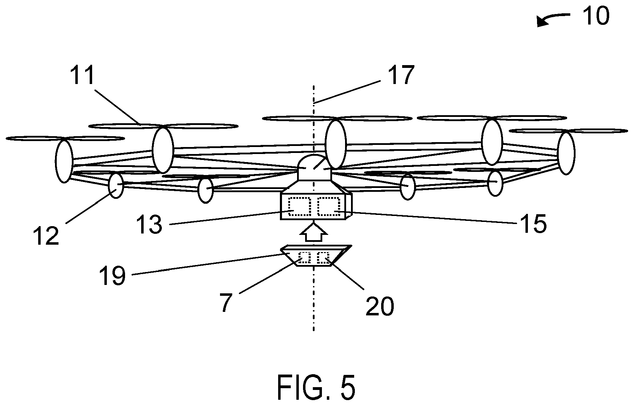

Alternativ ist das Steuer- und Versorgungssystem 5 zur kontaktlosen Kommunikation mit den ersten Schnittstellen 7 der Luftfahrzeuge 10 ausgebildet. Eine Schwarmsteuereinheit, insbesondere eine modulare Schwarmsteuereinheit 19, kann diesbezüglich in einer zweiten Ausführung, die nicht Teil der Erfindung ist, zur kontaktlosen Kommunikation ausgebildet sein. Die Schwarmsteuereinheit 19 weist die erste Schnittstelle 7 und die zweite Schnittstelle 20 auf. Über die zweite Schnittstelle 20 ist die Schwarmsteuereinheit 19 zur kontaktlosen Steuerung der Flugsteuereinheit 13 und/ oder zum Laden der Energiezelle 15 ausgebildet. In Figur 5 ist eine derartige Schwarmsteuereinheit 19 dargestellt, die in einem Gehäuse vor Witterungseinflüssen geschützt untergebracht ist. Die erfindungsgemäße modulare Schwarmsteuereinheit 19 kann an ein handelsübliches, zum Einzelflug hergestelltes Luftfahrzeug 10, im vorliegenden Beispiel an einen handelsüblichen Oktocopter, angekoppelt werden. Die modulare Schwarmsteuereinheit 19 ist hierfür entlang des in Figur 5 dargestellten Pfeils an dem Luftfahrzeug 10 anbringbar und gegebenenfalls von diesem auch wieder abnehmbar ausgebildet. Dies kann mittels jeder Art von lösbarer oder unlösbarer Befestigung durchführbar sein, beispielsweise durch eine Steck-, Klebe-, oder Schraubverbindung. Alternativ kann die Schwarmsteuereinheit 19 in ein einteiliges Gehäuse des Luftfahrzeugs 10 eingebracht werden, beispielsweise zugänglich über eine Abdeckung.

Der Funkempfänger der Flugsteuereinheit 13 kann als Funkempfänger für die von Sendemitteln der Schwarmsteuereinheit 19 gesendeten Steuerinformationen verwendet werden.

Alternativ kann die Schwarmssteuereinheit 19 kontaktgebunden beziehungsweise kabelgebunden an das Luftfahrzeug 10 angekoppelt werden. Hierzu wird beispielsweise der Funkempfänger eines handelsüblichen Luftfahrzeugs 10 abgesteckt und gegebenenfalls entfernt und anstatt des Funkempfängers die Schwarmsteuereinheit 19 an die Steckverbindung angesteckt. Die Schwarmsteuereinheit 19 weist nun Signalerzeugungsmittel zum Erzeugen von Steuerinformationen auf, wodurch die Schwarmsteuereinheit 19 über die zweite Schnittstelle 20 die Flugsteuereinheit 13 des Luftfahrzeugs 10 ansteuert. Die zweite Schnittstelle 20 kann hierbei gemäß einem Standard der folgenden Protokollen realisiert sein: Micro Air Vehicle Communication Portocol; CAN-Bus Protocol. Dies ist insbesondere dann sinnvoll, wenn die handelsüblichen Luftfahrzeuge 10 bereist eine solche Schnittstelle zur Flugsteuereinheit 13 aufweisen. Alternativ kann auch die erste Schnittstelle 7 als kontaktgebundene Schnittstelle im Wesentlichen entsprechend den oben gemachten Ausführungen ausgebildet sein, wobei die Steuer- und Versorgungssystem 5 zum kontaktgebundenen Laden und/ oder zur kontaktgebundenen Kommunikation mit den ersten Schnittstellen 7 der modulare Schwarmsteuereinheiten 19 ausgebildet ist.

Weisen die Luftfahrzeuge 10 eine Schwarmsteuereinheit 16 oder 19 auf, werden die Flugbahnen dieser Luftfahrzeuge 10 anhand der entsprechenden Steuerinformationen abgeflogen, die die Flugsteuereinheiten 13 von den Schwarmsteuereinheiten 16 oder 19 erhalten. Dabei kommen die Steuerinformationen direkt von den Schwarmsteuereinheiten 16 oder 19 und werden über entweder über ein Protokoll übermittelt oder es werden die Steuerinformationen einer durch einen Benutzer manuell gesteuerten Funkfernsteuerung simuliert. Zum Beispiel wird ein durch die Funkfernsteuerung nach "rechts" bewegtes Luftfahrzeug 10 durch die Schwarmsteuereinheit 16 oder 19 so lange nach rechts bewegt, bis die Schwarmsteuereinheit 16 oder 19 bemerkt, dass die Zielposition erreicht ist und Schwarmsteuereinheit 16 oder 19 auf "Position halten" schaltet, wobei die Flugsteuereinheit 13 die Antriebseinheit entsprechend den Vorgaben der Schwarmsteuereinheit 16 oder 19 ansteuert.

Optional können die Luftfahrzeuge 10 mittels der Schwarmsteuereinheiten 16 oder 19 auch untereinander kommunizieren. Hierdurch können, beispielsweise mit Hilfe von Abstandssensoren, die an den Schwarmsteuereinheiten 16 oder 19 angebracht sind, die Luftfahrzeuge 10 auf Basis der oben beschriebenen Schwarmintelligenz bewegt werden. Die Transportvorrichtungen 2 können ebenfalls zusätzliche Kommunikationsmittel 26 zum Kommunizieren mit den Schwarmsteuereinheiten 16 oder 19 und/ oder mit den Transportvorrichtungen 2 untereinander aufweisen.

Die Luftfahrzeuge 10 des Systems 1 können mittels der Schwarmsteuereinheiten 16 oder 19 gemäß obiger Beschreibung, in einem Schwarmverbund bewegt werden.

Gemäß den bisher gemachten Ausführungen ist bei dem erfindungsgemäßen System 1 die Kommunikation zwischen den ersten Schnittstellen 7 der Luftfahrzeugen 10 und dem Steuer- und Versorgungssystem 5 der Transportvorrichtungen 2 "rudimentär". Diese beschränkt sich primär darauf, dass das Steuer- und Versorgungssystem 5 die Luftfahrzeuge 10, beziehungsweise die Schwarmsteuereinheit 16 oder 19 anspricht, um deren technische Bereitschaft, beispielsweise die Funktionstüchtigkeit, oder andere technische Parameter, beispielsweise den Ladzustand der Energiezelle 15, abzufragen.

Das erfindungsgemäße System 1 kann gemäß der ersten Ausgestaltung, die in Figur 1 dargstellt ist, zusätzlich ein vollkommen automatisiertes Starten-, gegebenenfalls ein nachfolgendes Positionieren im Luftraum, beispielsweise anhand von Positionsinformationen einer darzustellenden Abbildung, und gegebenenfalls ein nachfolgendes Landen der Luftfahrzeuge 10, bereitstellen. Hierzu sind die erfindungsgemäßen Transportvorrichtungen 2 zum Starten- und Landen der Luftfahrzeuge 10 ausgebildet, wobei die Kammer 4 in Betriebslage an einer Oberseite der Transportvorrichtung 2 offen ist. Das Steuer- und Versorgungssystem 5 jeder ist zum Übertragen und/ oder zum Ändern von Start- und/ oder Landereihenfolgeinformationen und/ oder von Positionsinformationen an alle/ aller Flugsteuereinheiten 13, beziehungsweise an alle/ aller Schwarmsteuereinheiten 16 oder 19, der mit dem Steuer- und Versorgungssystem 5 verbundenen Luftfahrzeuge 10 ausgebildet.

Für den Fall, dass die Luftfahrzeuge 10 keine Schwarmsteuereinheit 16 oder 19 aufweisen, überträgt das Steuer- und Versorgungssystem 5 die Start- und/ oder

Landereihenfolgeinformationen und/ oder die Positionsinformationen an die Flugsteuereinheiten 13 beziehungsweise die Speichereinheiten 14 der Luftfahrzeuge 10. Für den Fall, dass die Luftfahrzeuge 10 eine Schwarmsteuereinheit 16 oder 19 aufweisen, überträgt das Steuer- und Versorgungssystem 5 die Start- und/ oder Landereihenfolgeinformationen und/ oder die Positionsinformationen an die Schwarmsteuereinheiten 16 oder 19. Das Luftfahrzeug 10 startet, fliegt und landet dann vollkommen automatisiert anhand dieser Informationen. Durch die Reihung der einzelnen Luftfahrzeuge 10 anhand der Start- und/ oder Landereihenfolgeinformationen können so die Positionen und/ oder Flugbahnen der einzelnen Luftfahrzeuge 10 im Schwarmverbund und/ oder in der Abbildung im Luftraum in Bezug auf Entfernung und Geschwindigkeit optimiert werden.

Dies bedeutet beispielsweise, dass ein Luftfahrzeug 10, das eine Positionen im Luftraum anzufliegen hat, die weiter von einem Startbereich entfernt liegt als die Positionen eines anderen Luftfahrzeugs 10, das in derselben oder einer anderen Transportvorrichtung 2 gelagert ist, eine vorgezogene Startposition in der Startreihenfolge und gegebenenfalls auch eine vorgezogene Landeposition in der Landereihenfolge zugeordnet bekommt, damit alle Luftfahrzeuge 10 ihre Position im Luftraum möglichst gleich erreichen. Für den Fall, dass sich beide Luftfahrzeuge 10 in derselben Transportvorrichtung 2 befinden, bedeutet dies beispielsweise, dass in Betriebslage das zuoberst gestapelte Luftfahrzeug 10 die Positionsinformationen für die am weitesten entfernte Position im Luftraum zugeordnet bekommt, das nachfolgend oben gestapelte Luftfahrzeug 10 die am zweitweitesten entfernte Position usw. Für den Fall, dass sich beide Luftfahrzeuge 10 in unterschiedlichen Transportvorrichtungen 2 befinden, bedeutet dies, dass das Luftfahrzeug 10 mit den Positionsinformationen für die am weitesten entfernte Position zuerst die Startfreigabe bekommt, das Luftfahrzeug 10 mit den Positionsinformationen für die am zweitweitesten entfernte Position die darauffolgende Startfreigabe bekommt usw. Im zweiten Fall müssen die Steuer- und Versorgungssysteme 5 der unterschiedlichen Transportvorrichtungen 2 miteinander kommunizieren.

Das System 1 gemäß der ersten Ausgestaltung, die in Figur 1 dargestellt ist, weist weiters eine Systemschwarmsteuereinheit 9 auf, wobei die Systemschwarmsteuereinheit 9 zum Kommunizieren mit den Steuer- und Versorgungssystemen 5, gegebenenfalls über die Kommunikationsmittel 26, der einzelnen Transportvorrichtungen 2 und/ oder zum Kommunizieren mit den einzelnen Luftfahrzeugen 10 über deren Schwarmsteuereinheiten 15 oder 19 oder über Kommunikationsmittel (nicht dargestellt) der Luftfahrzeuge 10 ausgebildet ist. Die Systemschwarmsteuereinheit 9 ist ein handelsüblicher Laptop-Computer, kann aber alternativ als auch ein handelsüblicher Computer, ein Tablet-Computer, ein Smartphone, usw. sein.

Das System 1 weist weiters eine Bodenplattform 23 zum Tragen der Transportvorrichtungen 2 auf. Zwischen den Steuer- und Versorgungssystemen 5 der Transportvorrichtungen 2 auf der Bodenplattform 23 untereinander und zwischen den Steuer- und Versorgungssystemen 5 und der Systemschwarmsteuereinheit 9 sind so feste Positionsbezüge ausgebildet, wodurch die Zuverlässigkeit des Systems 1 weiter verbessert werden kann.

Die Systemschwarmsteuereinheit 9 kann optional die Steuer- und Versorgungssysteme 5 aller Transportvorrichtungen 2 ersetzen.

Das Starten, und/ oder das Abfliegen der Flugbahn und/ oder das Landen aller Luftfahrzeuge 10 wird dann entsprechend der vorstehenden Beschreibung durchgeführt, wobei sämtliche Informationen, welche die Steuer- und Versorgungssysteme 5 der Transportvorrichtungen 2 und/ oder die Flugsteuereinheiten 13 und/ oder die Schwarmsteuereinheit 16 oder 19 erhalten von der Systemschwarmsteuereinheit 9 kommen. Auf diese Weise kann beispielsweise eine große Anzahl von handelsüblichen Luftfahrzeugen 10 direkt aus erfindungsgemäßen Transportvorrichtungen 2 von nur einer Person vollautomatisch gestartet, gegebenenfalls in einem Schwarmverbund bewegt und gegebenenfalls wieder in/ auf die Transportvorrichtungen 2 gelandet werden, wobei die Startreihenfolge, und/ oder die einzelnen Flugbahnen und/ oder die Landereihenfolge der Luftfahrzeuge 10 in Bezug auf den Schwarmflug und/ oder eine Abbildung im Luftraum optimiert sind.

Jede Transportvorrichtung 2 kann optional ein, vorzugsweise in Betriebslage im Wesentlichen vertikal bewegbares Hebemittel 22 zum Anheben der in der Kammer 4 der Transportvorrichtung 2 aufgenommenen Luftfahrzeuge 10 aufweisen. In einer möglichen Ausführung ist das Hebemittel 22 in die Bodeneinheit 6 integriert und wird durch das Steuer- und Versorgungssystem 5 und/oder der Systemschwarmsteuereinheit 9 gesteuert. Dabei bildet das Hebemittel 22 den Boden der Bodeneinheit 6, von dem die gestapelten Luftfahrzeuge 10 gehalten werden und dieser Boden kann mittels eines Antriebs 27 wie eine Aufzugsplattform im Wesentlichen vertikal nach oben oder unten bewegt werden. Der bewegbare Boden hebt oder senkt entsprechend den gesamten Stapel an aufgenommenen Luftfahrzeugen 10, wobei das jeweils oberste in der Kammer 4 gestapelte Luftfahrzeug 10 zumindest teilweise über die Begrenzungselemente 3 der Kammer 4 angehoben werden kann. Hierdurch wird beispielsweise ein Entnehmen der Luftfahrzeuge 10 erleichtert. Ebenso kann hierdurch ein etwaiger Start direkt aus der Transportvorrichtung 2 erleichtert werden. Der Antrieb 27 für das Heben und Senken des Hebemittels 22 kann beispielsweise über einen Kettenantrieb, über eine rotierende Stange mit Schraubgewinde oder über einen pneumatischen oder hydraulischen Zylinder realisiert sein.

In einer möglichen alternativen Ausführung ist das Hebemittel 22 in die Begrenzungselemente 3 integriert und dazu ausgebildet, mittels des Steuer- und Versorgungssystems 5 und/ oder der Systemschwarmsteuereinheit 9 und eines Antriebs den gesamten Stapel an aufgenommenen Luftfahrzeugen 10 oder jedes der Luftfahrzeuge 10 einzeln, beispielsweise über einen Eingriff an dem Gehäuse des Luftfahrzeuges 10, an- oder abzusenken. Der Antrieb für das Heben und Senken des Hebemittels 22 kann beispielsweise über einen Kettenantrieb, über pneumatische oder hydraulische Elemente realisiert sein.

Jedes Hebemittel 22 kann optional einen Kippmechanismus (nicht dargestellt) zum Entfernen eines Luftfahrzeugs 10 aufweisen, wobei das Steuer- und Versorgungssystem 5 und/ oder die Systemschwarmsteuereinheit 9 zum Steuern dieses Kippmechanismus ausgebildet sein kann. Im obigen Beispiel des bewegbaren Bodens kann dieser einfach gekippt werden. Hierdurch wird beispielsweise ein Entnehmen der Luftfahrzeuge 10 erleichtert. Ebenso kann hierdurch ein Luftfahrzeug 10, insbesondere ein funktionsunfähiges Luftfahrzeug 10, automatisiert von dem Hebemittel 22 oder von dem Stapel der aufgenommenen Luftfahrzeuge 10 entfernt werden, also aus dem System 1 entnommen werden. Alternativ kann anstatt des Kippmechanismus ein Wischmittel zum "Wegwischen" eines Luftfahrzeuges 10 ausgebildet sein. Das Steuer- und Versorgungssystem 5 oder die Systemschwarmsteuereinheit 9 ändert/ ändern gegebenenfalls entsprechend die Start- und/ oder Landereihenfolgeinformationen und/ oder die Positionsinformationen aller mit dem Steuer- und Versorgungssystem 5 verbundenen Luftfahrzeuge 10.

Jedes Hebemittel 22 kann optional einen mechanischen Startmechanismus (nicht dargestellt), insbesondere einen Katapultstartmechanismus, aufweisen, wobei das Steuer- und Versorgungssystem 5 und/ oder die Systemschwarmsteuereinheit 9 zum Steuern des Startmechanismus ausgebildet ist/ sind. Hierdurch kann ein etwaiger Start direkt aus der Transportvorrichtung 2 weiter erleichtert werden.

Jedes Hebemittel 22 kann optional Landemittel (nicht dargestellt) zum erleichterten Landen der in die Kammer 4 aufzunehmenden Luftfahrzeuge 10 aufweisen. Diese Landemittel können beispielsweise als eine Art "Air-Bag" rund um die obere Öffnung der Kammer 4 ausgebildet sein. Jedes zu landende Luftfahrzeug 10 wird dann von dem Landemittel aufgefangen und zurück in die Kammer 4 oder auf das Hebemittel 22 geleitet. Hierdurch kann auch bei erschwerten Wetterbedingungen mit Wind eine sichere Landung und Stapelung der Luftfahrzeuge 10 in den Kammern 4 sichergestellt werden.

Jedes Hebemittel 22 kann optional in Betriebslage an ihrer Oberseite, vorzugsweise steuerbare Fixiermittel (nicht dargestellt) zum Fixieren der in der Kammer 4 aufgenommenen Luftfahrzeuge 10 aufweisen. Hierdurch können die Luftfahrzeuge 10 insbesondere während des Transports gesichert werden. Die Fixiermittel könne auch mittels des Steuer- und Versorgungssystems 5 und/ oder der Systemschwarmsteuereinheit 9 elektrisch aktivierbar ausgeführt sein.

Es kann erwähnt werden, dass ein erfindungsgemäßes System als Rettungssystem und/ oder Transportssystem, beispielsweise im Falle einer Katastrophe, oder als Informationssystem bei Sportveranstaltungen wie ein Fahrradrennen oder einem Marathon eingesetzt werden kann. Hierbei können insbesondere durch die vorteilhafte Logistik des Systems eine große Anzahl von Luftfahrzeugen schnell platzsparend und folglich kostengünstig in einem Ziel- oder Katastrophengebiet bereitgestellt werden.

Der Begriff unbemanntes Luftfahrzeug ist im Rahmen dieser Erfindung sehr breit auszulegen und könnte beispielsweise auch Heißluftballone, Zeppeline, Modellflugzeuge oder Modellhubschrauber umfassen.

## Patentansprüche

1. System (1) aus zumindest zwei unbemannten Luftfahrzeugen (10), wobei jedes Luftfahrzeug (10) eine Antriebseinheit, eine Flugsteuereinheit (13) zum Steuern der Flugbahn des Luftfahrzeugs (10) mittels der Antriebseinheit und eine wiederaufladbare Energiezelle (15) aufweist, wobei jedes Luftfahrzeug (10) eine elektrische erste Schnittstelle (7) aufweist, wobei das System (1) zumindest eine Transportvorrichtung (2) mit zumindest einer durch Begrenzungselemente (3) definierte Kammer (4) zum Aufnehmen der in Betriebslage im Wesentlichen vertikal gestapelten Luftfahrzeuge (10) und ein elektrisches Steuer- und Versorgungssystem (5) zum Laden der Energiezellen (15) und/ oder zum Kommunizieren mit den Flugsteuereinheiten (13) über die ersten Schnittstellen (7) aufweist,
**dadurch gekennzeichnet, dass**
jedes Luftfahrzeug (10) eine als ein Kernmodul ausgebildete modulare Schwarmsteuereinheit (16) aufweist, wobei die Luftfahrzeuge (10) mittels der Kernmodule mechanisch entlang einer in Betriebslage im Wesentlichen vertikalen Stapelachse (17) stapelbar ausgebildet sind und, wobei jedes Kernmodul die Flugsteuereinheit (13), die Energiezelle (15), die erste Schnittstelle (7), die sich an einer Unterseite des Kernmoduls befindet, und eine elektrische dritte Schnittstelle (8), die sich an einer der Unterseite entlang der Stapelachse (17) gegenüberliegenden Oberseite des Kernmoduls befindet und zum elektrischen Verbinden mit der ersten Schnittstelle (7) eines darüber gestapelten Luftfahrzeugs (10) ausgebildet ist, aufweist, wobei in gestapeltem und verbundenen Zustand der Luftfahrzeuge (10) das Steuer- und Versorgungssystem (5) über die ersten Schnittstellen (7) und dritten Schnittstellen (8) zum Laden der Energiezellen (15) und/ oder zur Kommunikation mit den Kernmodulen ausgebildet ist.

2. System (1) gemäß Anspruch 1, **dadurch gekennzeichnet, dass** das Steuer- und Versorgungssystem (5) der Transportvorrichtung (2) zur kontaktlosen Kommunikation, vorzugsweise mittels elektromagnetischer Induktion, mit den ersten Schnittstellen (7) der Luftfahrzeuge (10) ausgebildet ist.

3. System (1) gemäß Anspruch 1, **dadurch gekennzeichnet, dass** das Steuer- und Versorgungssystem (5) der Transportvorrichtung (2) zur kontaktgebundenen Kommunikation mittels Schleifkontakten zwischen zumindest einem der Begrenzungselemente (3) der Kammer (4) und den ersten Schnittstellen (7) der Luftfahrzeuge (10) ausgebildet ist.

4. System (1) gemäß einem der vorhergehenden Ansprüche, **dadurch gekennzeichnet, dass** das Steuer- und Versorgungssystem (5) der Transportvorrichtung (2) in eine Bodeneinheit (6) der Transportvorrichtung (2) integriert ist, wobei die Kammer (4) in Betriebslage oberhalb der Bodeneinheit (6) angeordnet und das Steuer- und Versorgungssystem (5) mit der ersten Schnittstelle (7) des jeweils untersten gestapelten Luftfahrzeugs (10) verbindbar ausgebildet ist.

5. System (1) gemäß einem der vorhergehenden Ansprüche, **dadurch gekennzeichnet, dass** die Transportvorrichtung (2) weiters zum Starten- und Landen der Luftfahrzeuge (10) ausgebildet ist, wobei in Betriebslage die Kammer (4) an einer Oberseite der Transportvorrichtung (2) offen ist, wobei das Steuer- und Versorgungssystem (5) der Transportvorrichtung (2) zum Übertragen und/ oder zum Ändern von Start- und/ oder Landereihenfolgeinformationen und/ oder von Positionsinformationen an alle/ aller Flugsteuereinheiten (13) der mit dem Steuer- und Versorgungssystem (5) verbundenen Luftfahrzeuge (10) ausgebildet ist.

6. System (1) gemäß Anspruch 5, **dadurch gekennzeichnet, dass** die Transportvorrichtung (2) ein, vorzugsweise im Wesentlichen vertikal, bewegbares Hebemittel (22) aufweist, welches Hebemittel (22) dazu ausgebildet ist, das jeweils oberste in der Kammer (4) gestapelte Luftfahrzeug (10) für den Startvorgang zumindest teilweise über die Begrenzungselemente (3) der Kammer (4) anzuheben, wobei das Steuer- und Versorgungssystem (5) zum Steuern des Hebemittels (22) ausgebildet ist.

7. System (1) gemäß Anspruch 6, **dadurch gekennzeichnet, dass** das Hebemittel (22) einen Kippmechanismus oder ein Wischmittel aufweist, wobei der Kippmechanismus oder das Wischmittel dazu ausgebildet ist, ein funktionsunfähiges Luftfahrzeug (10) vom darunterliegenden Luftfahrzeug (10) oder vom Hebemittel (22) zu entfernen, wobei das Steuer- und Versorgungssystem (5) zum Steuern des Kippmechanismus oder des Wischmittels und zum Ändern der Start- und/ oder Landereihenfolgeinformationen und/ oder der Positionsinformationen an alle/ aller mit dem Steuer- und Versorgungssystem (5) verbundenen Luftfahrzeuge (10) ausgebildet ist.

8. System (1) gemäß Anspruch 6 oder 7, **dadurch gekennzeichnet, dass** die Transportvorrichtung (2) oder das Hebemittel (22) einen Startmechanismus aufweist, wobei der Startmechanismus dazu ausgebildet ist, ein zu startendes Luftfahrzeug (10) mechanisch in eine Startposition im Luftraum oberhalb der Transportvorrichtung (2) zu befördern, wobei das Steuer- und Versorgungssystem (5) zum Steuern des Startmechanismus ausgebildet ist.

9. System (1) gemäß einem der Ansprüche 3 bis 8, **dadurch gekennzeichnet, dass** das System (1) zumindest zwei, vorzugsweise eine Mehrzahl von, Transportvorrichtungen (2) und eine Systemschwarmsteuereinheit (9) zum Steuern einer Mehrzahl unbemannter Luftfahrzeuge (10) in einem Schwarm aufweist, wobei die Systemschwarmsteuereinheit (9) zum Kommunizieren mit den Steuer- und Versorgungssystem (5) der einzelnen Transportvorrichtungen (2) und/ oder zum Kommunizieren mit den einzelnen Luftfahrzeugen (10) über deren Schwarmsteuereinheiten (16; 19) oder über Kommunikationsmittel der Luftfahrzeuge (10) ausgebildet ist.

## Claims

1. A system (1) composed of at least two unmanned aerial vehicles (10), each aerial vehicle (10) comprising a drive unit, a flight control unit (13) for controlling the trajectory of the aerial vehicle (10) by means of the drive unit and a rechargeable power cell (15), each aerial vehicle (10) comprising an electrical first interface (7), wherein the system (1) comprises at least one transport device (2) with at least one chamber (4) defined by boundary elements (3) for receiving the aerial vehicles (10) stacked essentially vertically in the operating position and an electrical control and supply system (5) for charging the power cells (15) and/or for communicating with the flight control units (13) via the first interfaces (7),
**characterized in that**
each aerial vehicle (10) has a modular swarm control unit (16) designed as a core module, wherein the aerial vehicles (10) are designed by means of the core modules so as to be mechanically stackable along a stacking axis (17) which is essentially vertical in the operating position, and wherein each core module comprises the flight control unit (13), the power cell (15), the first interface (7) located at a lower side of the core module, and an electrical third interface (8) which is located at an upper side of the core module opposite to the lower side along the stacking axis (17) and is designed for electrical connection with the first interface (7) of an aerial vehicle (10) stacked on top of it, wherein, in a stacked and connected state of the aerial vehicles (10), the control and supply system (5) is designed for charging the power cells (15) and/or for communication with the core modules via the first interfaces (7) and the third interfaces (8).

2. A system (1) according to claim 1, **characterized in that** the control and supply system (5) of the transport device (2) is designed for contactless communication, preferably by means of electromagnetic induction, with the first interfaces (7) of the aerial vehicles (10).

3. A system (1) according to claim 1, **characterized in that** the control and supply system (5) of the transport device (2) is designed for contact-bound communication by means of sliding contacts between at least one of the boundary elements (3) of the chamber (4) and the first interfaces (7) of the aerial vehicles (10).

4. A system (1) according to any of the preceding claims, **characterized in that** the control and supply system (5) of the transport device (2) is integrated into a ground unit (6) of the transport device (2), wherein the chamber (4) is arranged above the ground unit (6) in the operating position and the control and supply system (5) is designed so as to be connectable to the first interface (7) of the respective aerial vehicle (10) stacked lowermost.

5. A system (1) according to any of the preceding claims, **characterized in that** the transport device (2) is furthermore designed for starting and landing the aerial vehicles (10), wherein the chamber (4) is open on an upper side of the transport device (2) in the operating position, with the control and supply system (5) of the transport device (2) being designed for transmitting and/or changing starting and/or landing sequence information and/or positional information to all/of all flight control units (13) of the aerial vehicles (10) connected to the control and supply system (5).

6. A system (1) according to claim 5, **characterized in that** the transport device (2) comprises a lifting means (22), which preferably is movable essentially vertically, which lifting means (22) is designed for raising the respective aerial vehicle (10) stacked uppermost in the chamber (4) for the starting process at least partially above the boundary elements (3) of the chamber (4), with the control and supply system (5) being designed for controlling the lifting means (22).

7. A system (1) according to claim 6, **characterized in that** the lifting means (22) comprises a tilting mechanism or a wiping means, wherein the tilting mechanism or the wiping means is designed for removing an inoperable aerial vehicle (10) from the aerial vehicle (10) located underneath or from the lifting means (22), with the control and supply system (5) being designed for controlling the tilting mechanism or the wiping means and for changing the starting and/or landing sequence information and/or the positional information to all/of all aerial vehicles (10) connected to the control and supply system (5).

8. A system (1) according to claim 6 or 7, **characterized in that** the transport device (2) or the lifting means (22) comprises a starting mechanism, wherein the starting mechanism is designed for mechanically bringing an aerial vehicle (10) to be started into a starting position in the airspace above the transport device (2), with the control and supply system (5) being designed for controlling the starting mechanism.

9. A system (1) according to any of claims 3 to 8, **characterized in that** the system (1) comprises at least two, preferably a plurality of, transport devices (2) and a system swarm control unit (9) for controlling a plurality of unmanned aerial vehicles (10) in a swarm, with the system swarm control unit (9) being designed for communicating with the control and supply system (5) of the individual transport devices (2) and/or for communicating with the individual aerial vehicles (10) via their swarm control units (16; 19) or via communication means of the aerial vehicles (10).

## Revendications

1. Système (1) constitué d'au moins deux aéronefs sans pilote (10), dans lequel chaque aéronef (10) comprend une unité d'entraînement, une unité de commande de vol (13) qui permet de commander la trajectoire de vol de l'aéronef (10) par l'intermédiaire de l'unité d'entraînement et une cellule d'énergie rechargeable (15), dans lequel chaque aéronef (10) présente une première interface électrique (7), dans lequel le système (1) présente au moins un dispositif de transport (2) pourvu d'au moins une chambre (4) qui est définie par des éléments de délimitation (3), ladite au moins une chambre permettant de loger les aéronefs (10) empilés sensiblement verticalement en position de fonctionnement, et un système de commande et d'alimentation électrique (5) permettant de charger les cellules d'énergie (15) et/ou de communiquer avec les unités de commande de vol (13) par l'intermédiaire des premières interfaces (7),
**caractérisé en ce que** chaque aéronef (10) comprend une unité de commande modulaire (16) de vol en formation qui est réalisée sous la forme d'un module central, dans lequel les aéronefs (10) sont réalisés de manière à pouvoir être empilés mécaniquement au moyen des modules centraux le long d'un axe d'empilage (17) sensiblement vertical en position de fonctionnement, et dans lequel chaque module central comprend l'unité de commande de vol (13), la cellule d'énergie (15), la première interface (7) qui est située sur une face inférieure du module central et une troisième interface électrique (8) qui est située sur une face supérieure du module central qui est opposée à une face inférieure le long de l'axe d'empilement (17) et qui est conçue de manière être reliée électriquement à la première interface (7) d'un aéronef (10) qui est empilé au-dessus de celle-ci, dans lequel le système de commande et d'alimentation électrique (5) est conçu de manière à charger les cellules d'énergie (15) et/ou à communiquer avec les modules centraux, à l'état empilé et connecté des aéronefs (10), par l'intermédiaire des premières interfaces (7) ainsi que des troisièmes interfaces (8).

2. Système (1) selon la revendication 1, **caractérisé en ce que** le système de commande et d'alimentation électrique (5) du dispositif de transport (2) est conçu de manière à établir une communication sans contact avec les premières interfaces (7) des aéronefs (10), de préférence par l'entremise d'une induction électromagnétique.

3. Système (1) selon la revendication 1, **caractérisé en ce que** le système de commande et d'alimentation électrique (5) du dispositif de transport (2) est conçu de manière à établir une communication par contact au moyen de contacts du type frottement entre au moins l'un des éléments de limitation (3) de la chambre (4) et les premières interfaces (7) des aéronefs (10).

4. Système (1) selon l'une quelconque des revendications précédentes, **caractérisé en ce que** le système de commande et d'alimentation électrique (5) du dispositif de transport (2) est intégré dans une unité au sol (6) du dispositif de transport (2), dans lequel la chambre (4) est disposée, en position de fonctionnement, au-dessus de l'unité au sol (6), et le système de commande et d'alimentation électrique (5) est conçu de manière à pouvoir être relié à la première interface (7) de l'aéronef empilé (10) qui est situé le plus bas.

5. Système (1) selon l'une quelconque des revendications précédentes, **caractérisé en ce que** le dispositif de transport (2) est en outre conçu de manière à permettre le lancement et l'atterrissage des aéronefs (10), dans lequel la chambre (4) est ouverte, en position de fonctionnement, sur une face supérieure du dispositif de transport (2), dans lequel le système de commande et d'alimentation électrique (5) du dispositif de transport (2) est conçu de manière à transmettre et/ou à modifier des informations relatives à un ordre de lancement et/ou d'atterrissage et/ou des informations de position à la totalité ou à une partie des unités de commande de vol (13) des aéronefs (10) qui sont reliés au système de commande et d'alimentation électrique (5).

6. Système (1) selon la revendication 5, **caractérisé en ce que** le dispositif de transport (2) comprend un moyen de levage (22) mobile, de préférence sensiblement vertical, ledit moyen de levage (22) étant conçu de manière à soulever, au moins partiellement au-dessus des éléments de limitation (3) de la chambre (4), l'aéronef empilé (10) qui est situé le plus haut dans la chambre (4) pour le lancement, dans lequel le système de commande et d'alimentation électrique (5) est conçu de manière à commander le moyen de levage (22).

7. Système (1) selon la revendication 6, **caractérisé en ce que** le moyen de levage (22) comprend un mécanisme d'inclinaison ou un moyen d'essuyage, dans lequel le mécanisme d'inclinaison ou le moyen d'essuyage est conçu de manière à éloigner un aéronef (10) qui ne fonctionne pas de l'aéronef (10) qui est situé en dessous ou du moyen de levage (22), dans lequel le système de commande et d'alimentation électrique (5) est conçu de manière à commander le mécanisme d'inclinaison ou le moyen d'essuyage et à modifier des informations relatives à un ordre de lancement et/ou d'atterrissage et/ou des informations de position à la totalité ou à une partie des aéronefs (10) qui sont reliés au système de commande et d'alimentation électrique (5).

8. Système (1) selon la revendication 6 ou 7, **caractérisé en ce que** le dispositif de transport (2) ou le moyen de levage (22) comprend un mécanisme de lancement, dans lequel ledit mécanisme de lancement est conçu de manière à acheminer mécaniquement un aéronef (10) qui doit être lancé en direction d'une position de lancement dans l'espace aérien au-dessus du dispositif de transport (2), le système de commande et d'alimentation électrique (5) étant conçu de manière à commander le mécanisme de lancement.

9. Système (1) selon l'une quelconque des revendications 3 à 8, **caractérisé en ce que** le système (1) comprend au moins deux, de préférence une pluralité dispositifs de transports (2) ainsi qu'une unité de commande de vol en formation du système (9) pour commander une pluralité d'aéronefs sans pilote (10), dans lequel l'unité de commande de vol en formation du système (9) est conçue de manière à communiquer avec le système de commande et d'alimentation électrique (5) de chaque dispositif de transport (2) et/ou de manière à communiquer avec les différents aéronefs (10) par l'intermédiaire de leurs unité de commande de vol en formation (16 ; 19) ou par l'intermédiaire des moyens de communication des aéronefs (10).
